# EUROPEAN PATENT SPECIFICATION

(11) **EP 0 874 154 B1**
(45) Date of publication and mention of the grant of the patent: **10.10.2001**
(21) Application number: 98107249.9
(22) Date of filing: 21.04.1998
(51) Int. Cl.: F04B 39/02, F04B 27/10, F16N 7/32, F04F 5/54

(54) **Compressor with lubrication mechanism in which a lubricating oil is sprayed into a crank chamber together with a refrigerant gas**
Kompressor mit einer Schmiervorrichtung mit welcher ein Schmieröl zusammen mit einem Kühlgas in ein Kurbelgehäuse geblasen wird
Compresseur avec un dispositif de lubrification permettant de pulvériser de l'huile avec un gaz de réfrigération dans une chambre de manivelle

(30) Priority: 22.04.1997 JP 10465397
(43) Date of publication of application: 28.10.1998
(73) Proprietor: Sanden Corporation, Isesaki-shi, Gunma 372-8502 (JP)
(72) Inventor: Uchikado, Iwao, Isesaki-shi, Gunma 372-8502 (JP)
(74) Representative: Prüfer, Lutz H., Dipl.-Phys.

(56) References cited:
- EP-A- 0 601 960
- DE-A- 19 614 186
- GB-A- 1 412 776
- US-A- 1 409 057
- US-A- 5 009 286
- US-A- 5 152 673

## Description

### Background of the Invention:

The present invention relates mainly to a swash plate type or a single swash plate type compressor (fixed displacement or variable displacement) for use in a vehicle air conditioner and, more specifically, to a compressor with a lubrication mechanism wherein, in an operated state, lubricating oil staying in a low-pressure crank chamber is sucked into a communication passage establishing communication between the crank chamber and a high-pressure discharge chamber or an intermediate-pressure chamber and then injected into the crank chamber in an atomized form.

For lubrication, there are three types of compressors. The first type carries out natural lubrication, wherein lubricating oil is delivered in the form of atomized oil in a return gas introduced into a crank chamber as a blowby gas. The second type is provided with a lubrication mechanism, wherein a reciprocating unit or the like is provided so as to carry out lubrication by splashing lubricating oil staying in a crank chamber. The third type is provided with a lubrication mechanism, wherein a pump is used to carry out lubrication by passing lubricating oil staying in a crank chamber through a lubricating oil passage formed in a main shaft at its center for feeding to various sliding portions.

In the first type, when the flow rate of the blowby gas is small, the lubrication to the sliding portions becomes insufficient to cause insufficient smoothing. In the second type, since splashing directions of the lubricating oil are accidental, the lubrication relative to specific positions on the sliding portions is difficult to improve.

In the first and second types, since the blowby gas or the lubricating oil staying in the crank chamber is concentrated to the outermost side of the crank chamber due to centrifugal forces and liquid viscosity during high-speed operation of the compressor, the lubrication becomes insufficient at a central sliding mechanism, rolling surfaces of bearings and the like which require more lubrication among the sliding portions. Thus, the smoothing can not be achieved effectively.

Further, in the third type, although the lubrication can be effectively carried out relative to those positions of the sliding portions located near the main shaft, the lubricating oil can not be supplied sufficiently relative to those positions located away from the main shaft in its diameter directions. Thus, the lubrication to the latter becomes insufficient to cause insufficient smoothing. Further, in the third type, it is difficult to form a lubricating oil passage in a main shaft depending on the kind of a compressor, or the number of parts is increased due to additional provision of the pump to cause an increase in cost.

### Summary of the Invention:

Therefore, it is an object of the present invention to provide a compressor with a lubrication mechanism which can accomplish sufficient lubrication with lubricating oil relative to sliding portions with a simple structure, irrespective of operating conditions and without limitation by the kind of the compressor.

Other objects of this invention will become clear as the description proceeds.

A compressor to which the present invention is applicable includes a crank chamber storing lubricating oil and a discharge chamber which is received with a refrigerant gas to thereby have pressure higher than that of the crank chamber in an operated state of the compressor. The compressor is characterized by further comprising a communication passage establishing communication between a given portion of the crank chamber and the discharge chamber, spraying means provided in the communication passage for spraying the refrigerant gas into the crank chamber, the spraying means having a spraying opening directed to the crank chamber, and an oil introducing passage establishing communication between a first portion near a bottom of the crank chamber and a second portion near the spraying opening for introducing the lubricating oil from the crank chamber to the second portion.

### Brief Description of the Drawing:

Fig. 1 is a side sectional view showing a basic structure of a conventional variable displacement wobble plate type compressor;
Figs. 2A and 2B are diagrams showing a basic structure of a variable displacement wobble plate type compressor with a lubrication mechanism according to a first preferred embodiment of the present invention, wherein Fig. 2A is a partially sectional side view of the compressor and Fig. 2B is a sectional view of a main part of the compressor;
Figs. 3A and 3B are diagrams for explaining a preferable example of oil spraying in the compressor shown in Figs. 2A and 2B, wherein Fig. 3A is a sectional view of a main part of the compressor and Fig. 3B is an enlarged view of Fig. 3A;
Fig. 4 is a sectional view of a main part of a variable displacement wobble plate type compressor with a lubrication mechanism according to a second preferred embodiment of the present invention;
Fig. 5 is a partially sectional side view showing a basic structure of a variable displacement wobble plate type compressor with a lubrication mechanism according to a third preferred embodiment of the present invention; and
Fig. 6 is a partially sectional side view showing a basic structure of a variable displacement single swash plate type compressor with a lubrication mechanism according to a fourth preferred embodiment of the present invention.

### Description of the Preferred Embodiments:

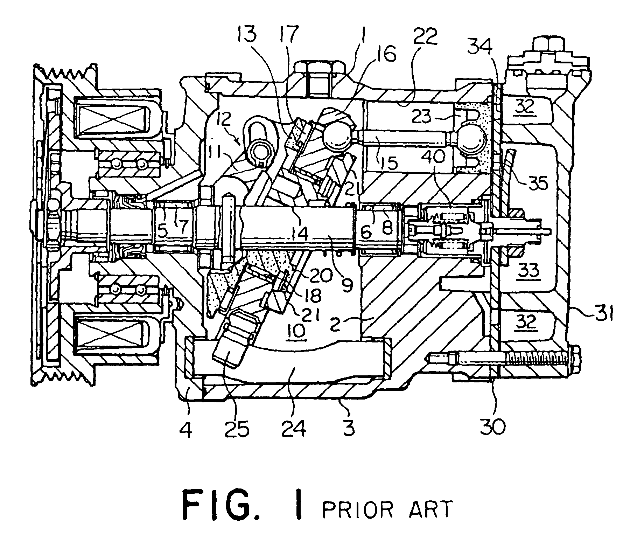

Prior to description of the preferred embodiments of the present invention, a conventional variable displacement wobble plate type compressor disclosed in JP-A-5-10256 will be explained with reference to Fig. 1 for facilitating understanding of the present invention.

In this compressor, a casing 1 comprises an essentially cylindrical casing body 3 having at its one end a cylinder block 2 formed integral therewith, and an essentially disk-shaped front end plate 4 closing an opening, at the other end, of the casing body 3. Through holes 5 and 6 are formed in the cylinder block 2 and the front end plate 4, respectively, and receive therein a main shaft 9 which is rotatably supported by bearings 7 and 8. A crank chamber 10 is defined between the cylinder block 2 and the front end plate 4 and provided with a rotor 11 mounted on the main shaft 9.

A swash plate 13 is attached to the rotor 11 via a hinge mechanism 12. An inner periphery 14 of the swash plate 13 is in slidable contact with the main shaft 9. An inclination of the swash plate 13 relative to the main shaft 9 is variable by means of the hinge mechanism 12. A wobble plate 16 is coupled with a plurality of piston rods 15 through ball connection and attached to the swash plate 13 through bearings 17 and 18. A balance ring 21 is attached to a central boss portion 20 of the swash plate 13 so as to rotate with the swash plate 13. The wobble plate 16 is held between the swash plate 13 and the balance ring 21.

The cylinder block 2 is provided with a plurality of cylinders 22 which are circumferentially arranged at regular intervals so as to surround the main shaft 9. In each of the cylinders 22, the piston rod 15 is coupled to a piston 23 through ball connection. In the crank chamber 10, a guide bar 24 is disposed in parallel to the main shaft 9. The guide bar 24 is rotatably supported by the cylinder block 2 at its one end and the front end plate 4 at its other end. The wobble plate 16 grasps the guide bar 24 by its holding portion 25 so that the rotation of the wobble plate 16 is prevented and only a wobbling motion thereof is allowed.

On the other hand, a cylinder head 31 is attached to an end surface of the cylinder block 2 via a valve plate 30. The cylinder head 31 is formed with a suction chamber 32 and a discharge chamber 33. The valve plate 30 is formed with an inlet 34 and an outlet 35. Further, at the center of the cylinder block 2 is provided a control valve 40 which controls communication between the crank chamber 10 and the suction chamber 32.

In the conventional compressor thus structured, the lubrication of various sliding portions is carried out in the manner as described before.

Specifically, as described before, there are three types of the compressors in terms of lubrication. The first type carries out the natural lubrication, wherein lubricating oil is delivered in the form of atomized oil in a return gas introduced into the crank chamber 10 as a blowby gas. The second type is provided with a lubrication mechanism, wherein a reciprocating unit or the like is provided so as to carry out lubrication by splashing lubricating oil staying in the crank chamber 10. The third type is provided with a lubrication mechanism, wherein a pump is used to carry out lubrication by passing lubricating oil staying in the crank chamber 10 through a lubricating oil passage formed in the main shaft 9 at the center thereof for feeding to various sliding portions.

In the first type, when the flow rate of the blowby gas is small, the lubrication to the sliding portions becomes insufficient to cause insufficient smoothing. In the second type, since splashing directions of the lubricating oil are accidental, the lubrication relative to specific positions on the sliding portions is difficult to improve.

In the first and second types, since the blowby gas or the lubricating oil staying in the crank chamber 10 is concentrated to the outermost side of the crank chamber 10 due to centrifugal forces and liquid viscosity during high-speed operation of the compressor, the lubrication becomes insufficient at the central sliding mechanism, the rolling surfaces of the bearings and the like which require more lubrication among the sliding portions. Thus, the smoothing can not be achieved effectively.

Further, in the third type, although the lubrication can be effectively carried out relative to those positions of the sliding portions located near the main shaft 9, the lubricating oil can not be supplied sufficiently relative to those positions located away from the main shaft 9 in its diameter directions. Thus, the lubrication to the latter becomes insufficient to cause insufficient smoothing. Further, in the third type, it is difficult to form a lubricating oil passage in the main shaft 9 depending on the kind of a compressor, or the number of parts is increased due to additional provision of the pump so as to cause an increase in cost.

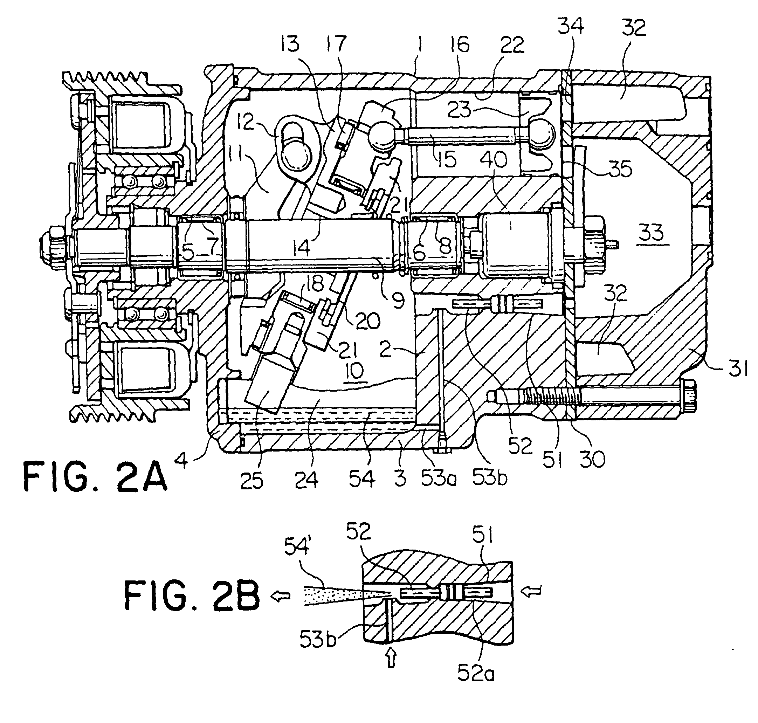

In view of the foregoing, a variable displacement wobble plate type compressor with a lubrication mechanism according to the first preferred embodiment of the present invention will be described hereinbelow with reference to Figs . 2A and 2B. Fig. 2A is an overall side sectional view of the compressor which is partially shown in section, and Fig. 2B is a sectional view of a main part of the compressor. In these figures, the same or similar components as those in Fig. 1 are represented by the same reference signs so as to omit explanation thereof in the following description.

Referring to Fig. 2A, a communication passage 51 is provided in a cylinder block 2 for establishing communication between a given portion of a crank chamber 10 and a discharge chamber 33. A nozzle member (which will be abbreviated to a nozzle) 52 is fixedly inserted in the communication passage 51 on the midway in a manner to block the communication passage 51. Further, the cylinder block 2 is formed with oil introducing passages 53a and 53b which establish communication between a portion of the crank chamber 10 near the bottom thereof and a portion of the communication passage 51 near a spraying opening of the nozzle 52 for introducing lubricating oil 54 staying at the bottom of the crank chamber 10 to the neighborhood of the spraying opening of the nozzle 52.

Referring to Fig. 2B, the nozzle 52 has a small hole 52a so as to work as a spraying arrangement. More particularly, the small hole 52a communicates with the communication passage 51 and is smaller than the communication passage 51 in a diameter thereof. Specifically, in the operated state of the compressor, the nozzle 52 introduces a refrigerant gas from the high-pressure discharge chamber 33 via the small hole 52a and sprays it along with the lubricating oil 54 introduced through the oil introducing passages 53a and 53b, into the low-pressure crank chamber 10 as atomized oil or oil mist 54'. The oil introducing passage 53a extends in parallel to the main shaft 9 from the neighborhood of the bottom of the crank chamber 10 to communicate with the oil introducing passage 53b, while the oil introducing passage 53b extends in perpendicular to the main shaft 9 to communicate with the neighborhood of the spraying opening of the nozzle 52 in the communication passage 51. The communication passage 51 is opened to the crank chamber 10 at the foregoing given portion of the crank chamber 10. This given portion is located at a position which can ensure essentially uniform spraying of the lubricating oil 54 relative to the sliding portions in the crank chamber 10 which require the lubrication.

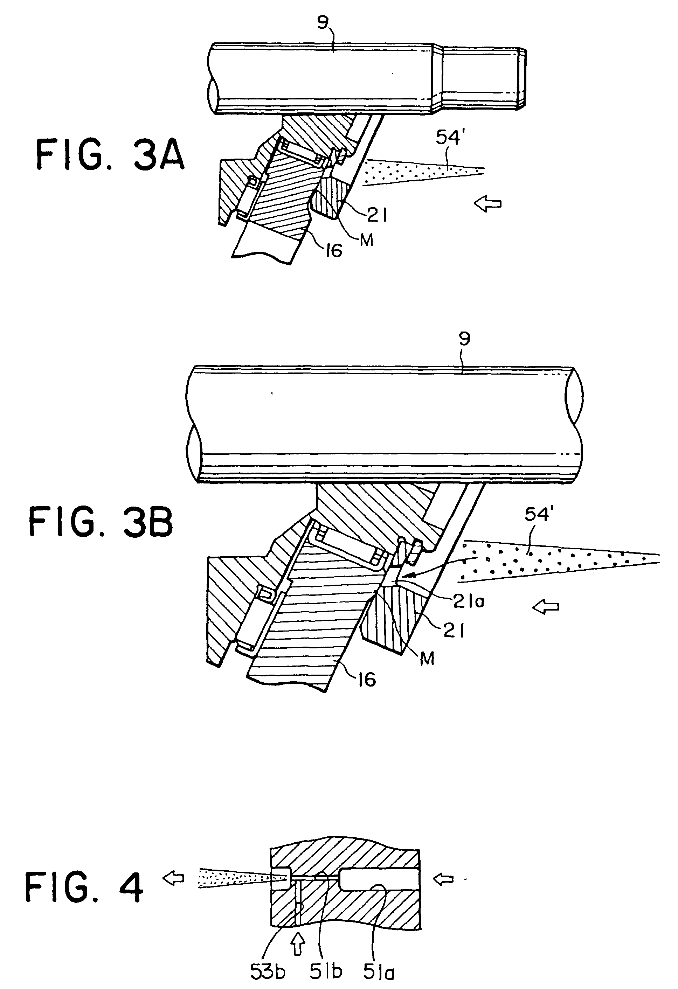

Figs. 3A and 3B are diagrams for explaining a preferable example of oil spraying in the compressor shown in Figs. 2A and 2B, wherein Fig. 3A is a sectional view of a main part of the compressor and Fig. 3B is an enlarged view of Fig. 3A.

Fig. 3A shows a case wherein the sprayed oil mist 54' is directed to sliding surfaces M of the balance ring 21 and the wobble plate 16. In this case, as clearly shown in Fig. 3B, a lubrication hole 21a may be formed through the balance ring 21 so that the oil mist 54' invades into between the sliding surfaces M via the lubrication hole 21a to carry out the lubrication thereof.

In this embodiment, in the operated state of the compressor, the refrigerant gas is sucked from the high-pressure discharge chamber 33 and sprayed into the low-pressure crank chamber 10 by means of the nozzle 52 in the communication passage 51. At this time, since the lubricating oil 54 staying in the low-pressure crank chamber 10 is introduced to the neighborhood of the spraying opening of the nozzle 52 in the communication passage 51 via the oil introducing passages 53a and 53b due to the Venturi effect, the introduced lubricating oil 54 becomes the oil mist 54' due to a pressure of the refrigerant gas sprayed through the nozzle 52 so as to be injected into the crank chamber 10. As appreciated, the foregoing given portion of the crank chamber 10 where the communication passage 51 is opened to the crank chamber 10 works as an injection opening for the oil mist 54'. As described above, since this given portion is located at the position which can provide essentially uniform spraying of the lubricating oil 54 relative to the sliding portions in the crank chamber 10 which require the lubrication, the sufficient lubrication with the lubrication oil can be achieved relative to the sliding portions irrespective of the operation conditions.

Fig. 4 is a sectional view of a main part of a variable displacement wobble plate type compressor with a lubrication mechanism according to the second preferred embodiment of the present invention.

In this compressor, as compared with the compressor of the first preferred embodiment, the nozzle 52 as the spraying arrangement is not used in the lubrication mechanism. Specifically, in this embodiment, the cylinder block 2 is formed, instead of the communication passage 51, with communication passages 51a and 51b having mutually different diameters for establishing communication between a given portion of the crank chamber 10 and the discharge chamber 33. In other words, the communication passage 51 has a particular part as the communication passage 51b which is smaller than another part as the communication passage 51a of the communication passage 51. In this structure, the particular part serves as the spraying arrangement.

More specifically, a sectional area, in diameter directions, of the communication passage 51a located at the side of the discharge chamber 33 is set to be much greater than a sectional area, in diameter directions, of the communication passage 51b located at the side of the crank chamber 10, and the oil introducing passage 53b is arranged to communicate with the communication passage 51b. With this arrangement, the communication passage 51b works as a venturi tube arrangement for spraying the lubricating oil 54 introduced through the oil introducing passage 53b, into the crank chamber 10 due to the pressure of the refrigerant gas introduced from the discharge chamber 33 via the communication passage 51a. In other words, the venturi tube arrangement sprays the refrigerant gas to cause low pressure which sucks up the lubricating oil 54 from the crank chamber 10 through the oil introducing passages 53a and 53b. Also in this embodiment, the foregoing given portion of the crank chamber 10 where the communication passage 51b is opened to the crank chamber 10 is located at a position which can provide essentially uniform spraying of the lubricating oil 54 relative to the sliding portions in the crank chamber 10 which require the lubrication. The other structure is the same as that of the first preferred embodiment.

Accordingly, also in this embodiment, in the operated state of the compressor, the refrigerant gas is sucked from the high-pressure discharge chamber 33 at the side of the communication passage 51a into the communication passage 51b so as to be sprayed into the low-pressure crank chamber 10. At this time, since the lubricating oil 54 staying in the low-pressure crank chamber 10 is introduced into the communication passage 51b via the oil introducing passages 53a and 53b due to the venturi effect, the introduced lubricating oil 54 becomes the oil mist 54' due to a pressure of the sprayed refrigerant gas so as to be injected into the crank chamber 10. As a result, the sufficient lubrication with the lubrication oil can be achieved relative to the sliding portions irrespective of the operation conditions.

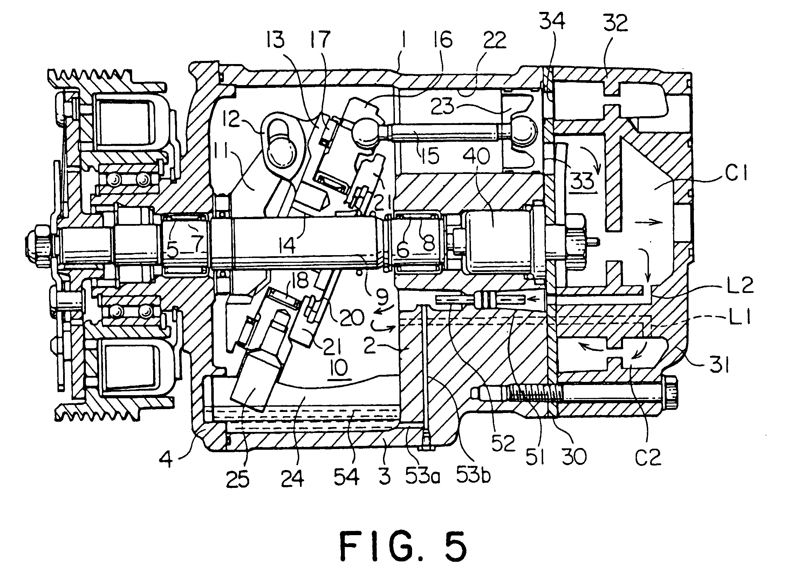

In each of the foregoing embodiments, the communication passage 51 or the communication passages 51a and 51b establish communication between the given portion of the crank chamber 10 and the discharge chamber 33. Fig. 5 is an overall side sectional view showing a basic structure of a variable displacement wobble plate type compressor with a lubrication mechanism according to the third preferred embodiment of the present invention. With reference to Fig. 5, however, depending on the kind of the compressor, an intermediate-pressure chambers C1, C2 whose pressures are reduced to an intermediate pressure between the discharge chamber pressure and the crank chamber pressure, or between the crank chamber pressure and the suction chamber pressure, may be provided within the cylinder head. In such a case, it may be arranged that the communication passage 51 or the communication passages 51a and 51b establish communication between the given portion of the crank chamber 10 and the intermediate-pressure chamber C1. For ensuring further stable lubrication by the lubrication mechanism, it is preferable to provide a refrigerant gas return passage L1 establishing communication between the crank chamber 10 and the intermediate-pressure chamber C2 for returning the refrigerant gas from the crank chamber 10 into the intermediate-pressure chamber C2 in the operated state of the compressor. However, in case of a displacement control compressor having a crank chamber pressure relief mechanism, the foregoing refrigerant gas return passage is not required.

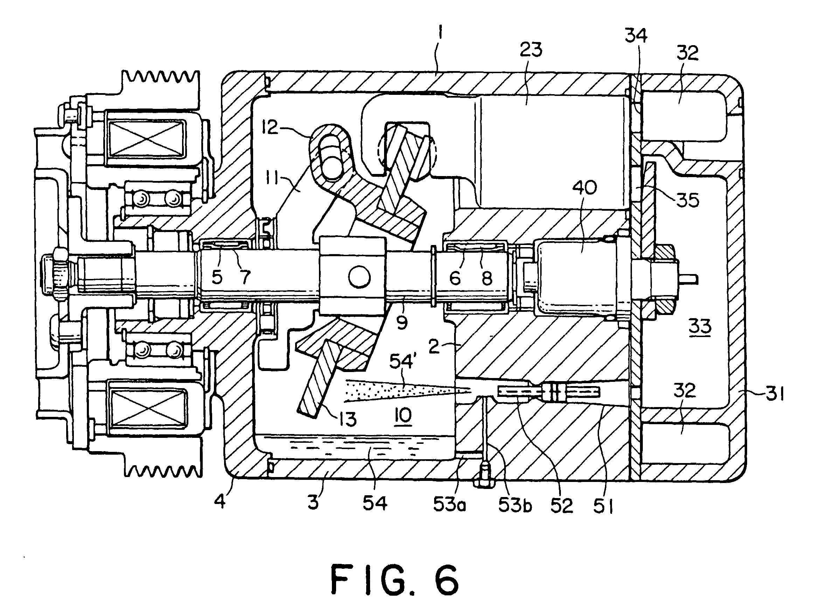

Further, although the compressor in each of the foregoing embodiments is of the variable displacement wobble plate type, the lubrication mechanism of the present invention is also applicable to another type of a swash or single swash plate type compressor (fixed displacement or variable displacement) for a vehicle air conditioner. For example, Fig. 6 is an overall side sectional view showing a basic structure of a variable displacement single swash plate type compressor with a lubrication mechanism according to the fourth preferred embodiment of the present invention, wherein portions of the structure are shown in section. Also in this figure, the same or similar components as those in Fig. 1 or Figs. 2A and 2B are represented by the same reference signs.

The compressor in this embodiment is provided with the lubrication mechanism which is the same as that of the first preferred embodiment, so as to carry out the lubrication of the sliding portions between the swash plate 13 and the pistons 23 by spraying the oil mist 54' thereto. Accordingly, as in the foregoing embodiments, the sufficient lubrication with the lubrication oil can be achieved relative to the sliding portions.

As described above, according to the foregoing preferred embodiments, the sufficient lubrication with the lubricating oil can be achieved relative to the sliding portions, which require the lubrication, with the simple structure, irrespective of the operating conditions and without limitation by the kind of the compressor. Therefore, the lubrication is improved to enhance the durability of the compressor and reduce generation of noise caused by the insufficient lubrication. Further, since the lubrication mechanism does not require a special drive unit or an external power, no noise problem due to the lubrication mechanism is raised and the lubrication is improved efficiently at the relatively low cost.

## Claims

1. A compressor including a crank chamber (10) storing lubricating oil (54) and a discharge chamber (33) which is received with a refrigerant gas to thereby have pressure higher than that of said crank chamber (10) in an operated state of said compressor, **characterized by** further comprising:
a communication passage (51) establishing communication between a given portion of said crank chamber and said discharge chamber;
spraying means (52) provided in said communication passage for spraying the refrigerant gas into said crank chamber, said spraying means having a spraying opening directed to said crank chamber; and
an oil introducing passage (53a, 53b) establishing communication between a first portion near a bottom of said crank chamber and a second portion near said spraying opening for introducing the lubricating oil from said crank chamber to said second portion.

2. The compressor according to claim 1, wherein said given portion of the crank chamber is located at a position which can provide essentially uniform spraying of the lubricating oil relative to portions, disposed in said crank chamber, which require lubrication.

3. The compressor according to claims 1 or 2, further comprising a refrigerant gas return passage (L1) which establishes communication between said crank chamber and a suction chamber (32) which has pressure lower than that of said crank chamber in the operated state, said refrigerant gas return passage being for returning the refrigerant gas from said crank chamber to said suction chamber in the operated state of said compressor.

4. The compressor according to claims 1 or 2, wherein said communication passage includes an intermediate-pressure chamber (C1) having intermediate pressure which is between those of said discharge chamber and said crank chamber in the operated state of said compressor, said spraying means being provided in said communication passage between said crank chamber and said intermediate-pressure chamber.

5. The compressor according to claim 4, further comprising a refrigerant gas return passage (L1) which establishes communication between said intermediate-pressure chamber and said crank chamber for returning the refrigerant gas from said crank chamber to said intermediate-pressure chamber.

6. The compressor according to anyone of claims 1 to 5, wherein said spraying means comprises a nozzle member (52) inserted in said communication passage, said nozzle member having a small hole (52a) which communicates with said communication passage and is smaller than said communication passage in a diameter thereof.

7. The compressor according to anyone of claims 1 to 5, wherein said communication passage has a particular part (51b) which is smaller than another part of said communication passage and serves as said spraying means.

8. The compressor according to anyone of claims 1 to 5, wherein said spraying means comprises venturi tube means connected to said communication passage for spraying the refrigerant gas to cause low pressure which introduces the lubricating oil from said crank chamber to said second portion of said oil introducing passage.

## Patentansprüche

1. Ein Kompressor enthält eine Kurbelkammer (10), die Schmieröl (54) speichert, und eine Ausstoßkammer (33), die ein Kühlmittelgas aufnimmt, um dadurch in einem Betriebszustand des Kompressors einen höheren Druck als denjenigen der Kurbelkammer (10) zu haben, **dadurch gekennzeichnet, dass** er des weiteren folgendes aufweist:
einen Verbindungskanal (51), zur Herstellung einer Verbindung zwischen einem vorgegebenen Abschnitt der Kurbelkammer und der Ausstoßkammer;
eine Sprühvorrichtung (52), die in dem Verbindungskanal vorgesehen ist, um das Kühlmittelgas in die Kurbelkammer zu sprühen, wobei die Sprühvorrichtung eine Sprühöffnung hat, die auf die Kurbelkammer gerichtet ist; und
einen Öleinführkanal (53a, 53b), der eine Verbindung zwischen einem ersten Abschnitt in der Nähe eines Bodens der Kurbelkammer und einem zweiten Abschnitt in der Nähe der Sprühöffnung zum Einführen des Schmieröls von der Kurbelkammer zu dem zweiten Abschnitt herzustellen.

2. Kompressor gemäß Anspruch 1, wobei der vorgegebene Abschnitt der Kurbelkammer an einer Stelle angeordnet ist, die für ein im Wesentlichen gleichmäßiges Versprühen des Schmieröls hinsichtlich der Abschnitte, die in der Kurbelkammer angeordnet sind, die eine Schmierung benötigen, sorgen kann.

3. Kompressor gemäß den Ansprüchen 1 oder 2, des weiteren aufweisend einen Kühlmittelgasrücklaufkanal (L1), der eine Verbindung zwischen der Kurbelkammer und einer Ansaugkammer (32) herstellt, die einen niedrigeren Druck als denjenigen der Kurbelkammer im Betriebszustand hat, wobei der Kühlmittelgasrücklaufkanal dazu dient, das Kühlmittelgas aus der Kurbelkammer im Betriebszustand des Kompressor zur Ansaugkammer zurückzuführen.

4. Kompressor gemäß den Ansprüchen 1 oder 2, wobei der Verbindungskanal eine Zwischendruckkammer (C1) enthält, die einen Zwischendruck besitzt, der zwischen denjenigen der Ausstoßkammer und der Kurbelkammer im Betriebszustand des Kompressors liegt, wobei die Sprühvorrichtung in dem Verbindungskanal zwischen der Kurbelkammer und der Zwischendruckkammer vorgesehen ist.

5. Kompressor gemäß Anspruch 4, des weiteren aufweisend einen Kühlmittelgasrücklaufkanal (L1), der eine Verbindung zwischen der Zwischendruckkammer und der Kurbelkammer zum Zurückleiten des Kühlmittelgases aus der Kurbelkammer zu der Zwischendruckkammer herstellt.

6. Kompressor gemäß einem der Ansprüche 1 bis 5, wobei die Sprühvorrichtung ein Düsenbauteil (52) aufweist, das in den Verbindungskanal eingesetzt ist, wobei das Düsenbauteil ein kleines Loch (52a) hat, das mit dem Verbindungskanal kommuniziert und dessen Durchmesser kleiner als der des Verbindungskanals ist.

7. Kompressor gemäß einem der Ansprüche 1 bis 5, wobei der Verbindungskanal einen bestimmten Teil (51b) hat, der kleiner als ein anderer Teil des Verbindungskanals ist und als Sprühvorrichtung dient.

8. Kompressor gemäß irgendeinem der Ansprüche 1 bis 5, wobei die Sprühvorrichtung eine Venturirohrvorrichtung aufweist, die mit dem Verbindungskanal verbunden ist, zum Versprühen des Kühlmittelgases, um einen niedrigen Druck hervorzurufen, der das Schmieröl aus der Kurbelkammer in den zweiten Abschnitt des Öleinführkanals einführt.

## Revendications

1. Compresseur comprenant une chambre de manivelle (10) stockant de l'huile de lubrification (54), et une chambre de décharge (33) recevant un gaz réfrigérant pour avoir ainsi une pression plus élevée que celle de la chambre de manivelle (10) dans un état de fonctionnement du compresseur,
**caractérisé en ce qu'**
il comprend en outre :
un passage de communication (51) établissant une communication entre une partie donnée de la chambre de manivelle et la chambre de décharge ;
un moyen de pulvérisation (52) prévu dans le passage de communication pour pulvériser le gaz réfrigérant dans la chambre de manivelle, ce moyen de pulvérisation comportant une ouverture de pulvérisation dirigée vers la chambre de manivelle ; et
un passage d'introduction d'huile (53a, 53b) établissant une communication entre une première partie voisine du fond de la chambre de manivelle, et une seconde partie voisine de l'ouverture de pulvérisation, pour introduire l'huile de lubrification provenant de la chambre de manivelle, dans la seconde partie.

2. Compresseur selon la revendication 1,
dans lequel
la partie donnée de la chambre de manivelle est placée à un endroit qui peut fournir une pulvérisation essentiellement uniforme de l'huile de lubrification par rapport aux parties, disposées dans la chambre de manivelle, qui nécessitent une lubrification.

3. Compresseur selon les revendications 1 ou 2,
comprenant en outre
un passage de retour de gaz réfrigérant (L1) qui établit une communication entre la chambre de manivelle et une chambre d'aspiration (32) présentant une pression inférieure à celle de la chambre de manivelle dans l'état de fonctionnement, le passage de retour de gaz réfrigérant étant destiné à ramener le gaz réfrigérant de la chambre de manivelle vers la chambre d'aspiration dans l'état de fonctionnement du compresseur.

4. Compresseur selon les revendications 1 ou 2,
dans lequel
le passage de communication comprend une chambre de pression intermédiaire (C1) présentant une pression intermédiaire comprise entre celle de la chambre de décharge et celle de la chambre de manivelle, dans l'état de fonctionnement du compresseur, le moyen de pulvérisation étant prévu dans le passage de communication entre la chambre de manivelle et la chambre de pression intermédiaire.

5. Compresseur selon la revendication 4,
comprenant en outre
un passage de retour de gaz réfrigérant (L1) qui établit une communication entre la chambre de pression intermédiaire et la chambre de manivelle, pour ramener le gaz réfrigérant de la chambre de manivelle vers la chambre de pression intermédiaire.

6. Compresseur selon l'une quelconque des revendications 1 à 5,
dans lequel
le moyen de pulvérisation comprend un élément de buse (52) introduit dans le passage de communication, cet élément de buse comportant un petit trou (52a) qui communique avec le passage de communication, ce petit trou ayant un diamètre plus petit que celui du passage de communication.

7. Compresseur selon l'une quelconque des revendications 1 à 5,
dans lequel
le passage de communication, comporte une partie particulière (51b) qui est plus petite que l'autre partie du passage de communication, et sert de moyen de pulvérisation.

8. Compresseur selon l'une quelconque des revendications 1 à 5,
dans lequel
le moyen de pulvérisation comprend un moyen de tube de venturi relié au passage de communication pour pulvériser le gaz réfrigérant de manière à produire une basse pression qui introduit l'huile de lubrification provenant de la chambre de manivelle, dans la seconde partie du passage d'introduction d'huile.
